# EUROPÄISCHE PATENTANMELDUNG

(11) **EP 2 448 111 A2**
(43) Veröffentlichungstag der Anmeldung: **02.05.2012**
(21) Anmeldenummer: 11008423.3
(22) Anmeldetag: 20.10.2011
(51) Int. Cl.: H02P 23/00, H02P 1/02

(54) **Steuervorrichtung zur Steuerung eines Rohrmotors**

(30) Priorität: 01.11.2010 DE 102010049887
(71) Anmelder: Adolf Tedsen GmbH & Co. KG, 22946 Trittau (DE)
(72) Erfinder: Meyer, Bernd, 31141 Hildesheim (DE); Koops, Christoph, 22946 Trittau (DE); Freier, Rolf, 22926 Ahrensburg (DE)
(74) Vertreter: Hausfeld, Norbert

(57) **Zusammenfassung**

Eine Steuervorrichtung zur Steuerung eines von einer Versorgungsquelle (5, 18) über eine Zuleitung (2, 3) mit Strom versorgten Rohrmotors (11), ist dadurch gekennzeichnet, dass zum Senden von Daten auf der Zuleitung eine den versorgenden Strom in Form von die Daten wiedergebenden Impulsen unterbrechende Stromunterbrechungseinrichtung (19) und zum Empfang der Daten eine den versorgenden Strom messende Strommesseinrichtung (20) vorgesehen sind.

## Beschreibung

Die Erfindung betrifft eine Steuervorrichtung der im Oberbegriff des Anspruchs 1 genannten Art und einen Rohrmotor mit einer solchen Steuervorrichtung sowie ein Verfahren zum Auslesen von Daten aus einer solchen Steuervorrichtung.

Rohrmotoren sind Elektromotoren, die zum Einbau in Hohlwellen vorgesehen sind, um diese anzutreiben. Hauptanwendungsgebiet sind motorisch betriebene Rollläden, Jalousien, Markisen und ähnliche Konstruktionen. Es gibt wohl nur wenige Häuser in Deutschland, in denen nicht wenigstens ein Rohrmotor betrieben wird.

Alle moderneren Rohrmotoren sind mit gattungsgemäßen Steuervorrichtungen versehen, die den Rohrmotor steuern. In erster Linie geht es dabei um den automatischen Stop an den beiden Enden des verfügbaren Fahrweges des vom Rohrmotor angetriebenen Gegenstandes, z.B. eines Rollladens. Dazu werden z.B. Motorumdrehungen oder sonstige Motortakte gezählt und mit z.B. beim Einbau des Rohrmotors eingegebenen Werten verglichen. Die Steuervorrichtung verfügt über eine Ermittlungseinrichtung, die die Zustände der Steuervorrichtung ermittelt, also z.B. die aktuelle Stellung eines Rollladens innerhalb seiner zulässigen Fahrstrecke oder z.B. Störungen. Diese können dann z.B. in einem Speicher der elektronischen Steuervorrichtung abgespeichert werden, um später vom Wartungspersonal ausgelesen werden zu können.

Bekannte gattungsgemäße Steuervorrichtungen sind ebenso wie die Rohrmotoren, bei denen die Steuervorrichtung verwendet werden, unter extremem Kostendruck konstruiert und gefertigt. Gesonderte Vorrichtungen zum Ausgeben der in der Steuervorrichtung gehaltenen Daten sind nur in Sonderfällen vorgesehen. Die meisten besonders einfachen Steuervorrichtungen verfügen über keinerlei Kommunikationseinrichtungen. Komfortablere bekannte Steuervorrichtungen verfügen nur über eine Einweg-Kommunikation und können nur von außen Steuerbefehle empfangen, beispielsweise von einer Funkfernsteuerung des Bedieners. Hierfür sind jedoch aufwendige Hochfrequenz-Modulationsschaltungen erforderlich.

Will man bei einer gattungsgemäßen Steuervorrichtung Zustandsdaten auslesen, so muss man nach dem Stand der Technik die Steuervorrichtung ausbauen, was bei Rohrmotorsteuerungen stets außerordentlich mühevoll ist, und dann öffnen, um die elektronischen Komponenten zu kontaktieren. Das routinemäßige Auslesen von Daten durch den Jalousienbauer vor Ort ist bisher nicht möglich, obwohl dadurch eine Reihe von Problemen bekämpft werden könnten, angefangen von der korrekten Einstellung der Steuervorrichtung bis hin zur rascheren Entscheidung über notwendige Reparaturen.

Auch die Eingabe von Daten von aussen in die Steuervorrichtung kann Probleme aufwerfen, z.B. wenn keine zur Steuervorrichtung führende Datenleitung oder Funkstrecke vorhanden ist, oder wenn diese unter bestimmten Bedingungen, z.B. bei der Fertigung der Steuervorrichtung nicht oder noch nicht nutzbar ist.

Die Aufgabe der vorliegenden Erfindung besteht darin, einen einfachen Datenverkehr mit gattungsgemäßen Steuervorrichtungen zu ermöglichen.

Diese Aufgabe wird erfindungsgemäß mit den Merkmalen des Kennzeichnungsteiles des Anspruchs 1, mit dem Anspruch 8, sowie mit den Verfahrensmerkmalen der Ansprüche 9 oder 10 gelöst.

Erfindungsgemäß wird zur Datenübertragung der Strom auf der Zuleitung im Datentakt impulsweise unterbrochen. Die Daten lassen sich durch einfache Strommessung lesen. Die dazu erforderlichen Änderungen an der Steuervorrichtung sind sehr geringfügig und kostengünstig. Es sind keine komplizierten Schaltungselemente, wie z.B. Hochfrequenzschaltungen, erforderlich. Bei geringen Anforderungen an die Übertragungsgeschwindigkeit, wie sie hier typisch sind, reichen einfache Unterbrechungsschalter und Strommesser aus. Es sind vor allem auch keine zusätzlichen Leitungen erforderlich, da die Datenübertragung unmittelbar über die vorhandene Zuleitung erfolgt. Das ist insbesondere von Vorteil bei schwierigen Einbauorten, in denen gattungsgemäße Steuervorrichtungen regelmäßig anzufinden sind.

Vorzugsweise kann die Steuervorrichtung gemäss Anspruch 2 auf diese Weise eigene Zustandsdaten nach aussen senden, wo diese z.B. vom Wartungstechniker benötigt werden.

Vorzugsweise gemäss Anspruch 3 lassen sich Daten nach innen in die Steuervorrichtung übertragen, um z.B. in der Fabrik Grundeinstellungsdaten zu laden. Die erfindungsgemässe Möglichkeit zur Datenübertragung ohne spezielle Datenleitungen oder eine Funkstrecke ist dabei von grossem Vorteil.

Die Steuervorrichtung kann ständig, z.B. online, ermittelte Zustände in Datenform ausgeben. Man könnte dann die Arbeitsweise der Steuervorrichtung laufend mitlesen. Das ist aber nur selten erforderlich. Meist sind die Daten einer Steuervorrichtung nur selten von Interesse, z.B. bei einer Störung, wenn ein Wartungstechniker vor Ort ist. Vorteilhaft ist daher, gemäß Anspruch 4, ein besonderer Ausgabemodus der Steuervorrichtung vorgesehen, in den die Steuervorrichtung bei Bedarf bringbar ist. Ist der Ausgabemodus nicht eingeschaltet, so arbeitet sie im Normalbetrieb.

Der Ausgabemodus muss von außen aktiviert werden. Das kann beispielsweise über vorhandene Steuerleitungen oder eine vorhandene Funkstrecke geschehen. Bei den meisten gattungsgemäßen Steuervorrichtungen ist so etwas aber nicht vorhanden. Dann sind vorteilhaft die Merkmale des Anspruches 5 vorgesehen. Zum Aktivieren des Ausgabemodus wird einfach eine andere als die normale Spannung angelegt. Die Steuervorrichtung benötigt dann lediglich einfache Überwachungsmittel, die die angelegte Spannung überwachen. Als andere Spannung kann z.B. eine Spannung anderen Spannungswertes verwendet werden, z.B. 115V, anstelle der üblichen 230V. Es kann auch eine Spannung mit besonderen Impulskennzeichnungen und dergleichen verwendet werden.

Vorteilhaft gemäß Anspruch 6 wird zur Aktivierung eine Gleichspannung anstelle der sonst zum Betrieb des Rohrmotors vorhandenen Wechselspannung angelegt. Das Umschalten von Wechselspannung auf Gleichspannung ist sehr einfach erkennbar, um den Ausgabemodus zu aktivieren. Der mit Wechselspannung zu betreibende Rohrmotor kann dann zwar nicht weiterlaufen, das ist aber auch nicht erforderlich, da beim Auslesen von Daten ein Rollladenbetrieb nicht erforderlich ist. Vorteilhaft an der Verwendung von Gleichspannung zum Schalten ist, dass diese auch zur Aufrechterhaltung der Versorgung der Steuervorrichtung dienen kann, solange diese nicht in üblicher Weise von der Wechselspannung her über ein Netzgerät versorgbar ist. Vorteilhaft an der Verwendung von Gleichspannung ist ferner, dass bei einem Gleichstrom die Unterbrechungsimpulse mit beliebig hoher Impulsrate möglich sind. Die Impulsausgabe nach Anspruch 1 wäre ohne Weiteres auch bei einer Wechselstromversorgung möglich. Dann wäre aber eine einfache Datenübertragung mit Unterbrechungsimpulsen nur möglich durch Weglassen von Halbwellen, was die maximale Übertragungsrate auf 50Hz beschränkt. Für höhere Übertragungsraten müsste auf Hochfrequenzimpulse ausgewichen werden, was einen erheblichen Schaltungsaufwand bedingt. Gemäß Anspruch 7, ist eine solche Versorgungsquelle transportabel ausgebildet und wird an eine Trennstelle der Zuleitung angeschlossen, z.B. an einem ohnehin vorhandenen Stecker oder z.B. an einer Verteilerdose in einer dem Rollladen benachbarten Wand. Da die Versorgungsquelle Gleichspannung liefert, kann sie ohne Weiteres von Batterien betrieben werden.

Anspruch 8 stellt einen mit einer erfindungsgemäßen Steuervorrichtung versehenen Rohrmotor unter Schutz.

Die Ansprüche 9 und 10 schützen ein vorteilhaftes Verfahren zum Auslesen von Daten aus der erfindungsgemäßen Steuervorrichtung.

In der Zeichnung ist die Erfindung beispielsweise und schematisch dargestellt. Es zeigen:
- Fig. 1: eine erfindungsgemäße Steuervorrichtung mit Rohrmotor und über eine Trennstelle angeschlossener Wechselstromversorgungsquelle,
- Fig. 2: eine zum alternativen Anschluss an der Trennstelle vorgesehene erfindungsgemäße Gleichspannungsquelle.

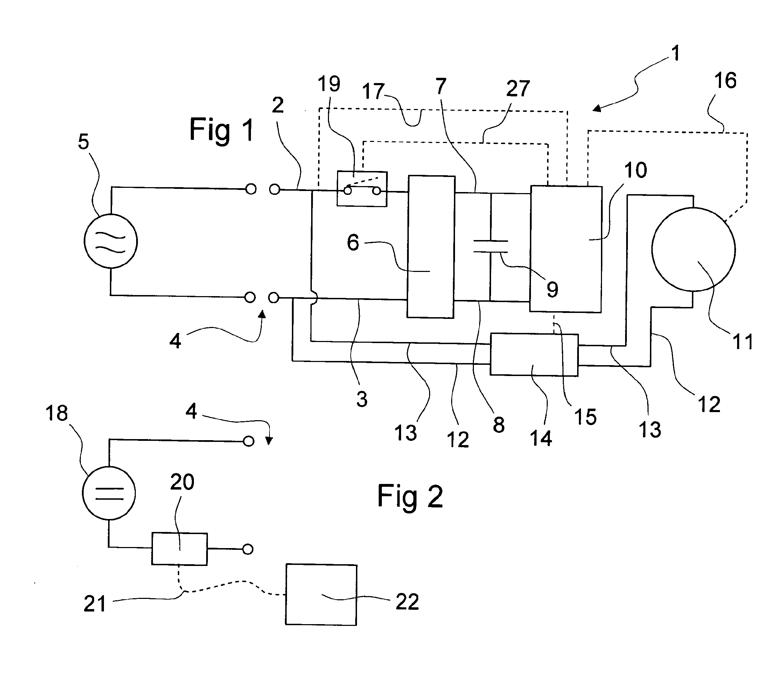

Fig. 1 zeigt eine Steuervorrichtung 1, die mit einer aus den Leitungen 2 und 3 bestehenden Zuleitung über eine Trennstelle 4 an eine Wechselspannungsquelle 5 anschließbar ist. Die Trennstelle 4 kann beispielsweise eine lösbare Kupplung oder eine Klemmverbindung sein. Die Wechselspannungsquelle 5 kann beispielsweise das übliche 230V Versorgungsnetz sein.

Die Steuervorrichtung 1 versorgt mit der Zuleitung 2, 3 ein Netzgerät 6, das auf Leitungen 7, 8 eine niedrige Gleichspannung von z.B. 12V abgibt, die zur Versorgung elektronischer Geräte gut geeignet ist.

An den Gleichspannungsleitungen 7, 8 hängt ein Kondensator 9, als Beispiel eines Energiespeichers. Es könnte an dieser Stelle auch z.B. ein Akkumulator vorgesehen sein. Die Gleichspannungsleitung 7, 8 versorgen eine Elektronikeinrichtung 10.

Ein Rohrmotor 11, der im Ausführungsbeispiel ein mit Netzwechselspannung betreibbarer Elektromotor ist, ist über Leitungen 12, 13 an die Zuleitung 2, 3 angeschlossen, und zwar über eine Steuereinrichtung 14, die ihrerseits über eine Steuerleitung 15 von der Elektronikeinrichtung 10 gesteuert wird. Dadurch ist es der Elektronikeinrichtung möglich, über die entsprechend ausgebildete Steuereinrichtung 14 den Rohrmotor 11 ein- beziehungsweise auszuschalten, mit unterschiedlichen Drehzahlen zu betreiben oder z.B. auch in der Drehrichtung umzukehren. Dazu sind Steuerbefehle vom Bediener erforderlich, die der Elektronikeinrichtung 10 von außen vorgebbar sind, beispielsweise mittels einer nicht dargestellten Funkfernsteuerung.

Die Elektronikeinrichtung 10 kann allerdings auch eine Reihe von Steuerfunktionen des Motors selbst ermitteln. Sie kann beispielsweise den Motor abschalten, wenn sie einen zu starken Motorstrom ermittelt. Dazu sind nicht dargestellte Einrichtungen zur Überwachung des Motorstroms erforderlich, die beispielsweise in der Steuereinrichtung 14 vorgesehen sein können und ihre Messwerte über die Steuerleitung 15 an die Elektronikeinrichtung 10 melden können. Zustandsdaten des Motors 11, wie beispielsweise Umdrehungen oder dergleichen, können mit einer weiteren Steuerleitung 16 an die Elektronikeinrichtung 10 gemeldet werden.

Über eine Steuerleitung 17 empfängt die Elektronikeinrichtung 10 die an der Zuleitung 2, 3 anliegende Spannung. Sie kann daraus z.B. die Höhe der Spannung, die Polarität oder die Spannungsart (Wechselspannung, Gleichspannung) ermitteln.

Um die Spannung zu ändern, wird im Ausführungsbeispiel an der Trennstelle 4 die Wechselspannungsquelle 5 abgekoppelt und eine in Fig. 2 dargestellte Gleichspannungsquelle 18 angekoppelt. Die Elektronikeinrichtung 10 ist dazu ausgebildet, bei Erkennen einer Gleichspannung auf der Steuerleitung 17 in einen Ausgabemodus zu schalten.

Im Ausgabemodus beschäftigt sich die Elektronikeinrichtung 10 nun damit, zunächst alle verfügbaren oder ausgewählte Daten zu ermitteln, die ihr z.B. in Speichereinrichtungen zur Verfügung stehen. Dies können z.B. gespeicherte Fehlerberichte sein, Zustandsdaten über die Stellung des Motors, also über die Stellung z.B. des vom Rohrmotor 11 gesteuerten Rollladens, über Abschaltpunkte oder dergleichen. Die Daten werden in der Elektronikeinrichtung 10 in ein zur Übertragung geeignetes Format gebracht und dann über eine Steuerleitung 27 auf eine Stromunterbrechungseinrichtung in Form eines Unterbrechungsschalters 19 gegeben, der normalerweise geschlossen ist und im Takt der steuernden Impulse öffnet, um die Zuleitung 2 zu unterbrechen.

Die Arbeitsweise der Elektronikeinrichtung 10 wird bei Öffnung des Unterbrechungsschalters 19 nicht gestört, da der Kondensator oder ein anderer Energiespeicher an dieser Stelle die Versorgungsspannung aufrechterhält.

Bei Anlegen der in Fig. 2 dargestellten Gleichspannungsquelle 18, wird eine Strommesseinrichtung 20 in den die Steuervorrichtung 1 versorgenden Stromkreis geschaltet und misst laufend den Versorgungsstrom. Das Ergebnis geht über eine Steuerleitung 21 an eine Datenauswerteinrichtung in Form eines Computers 22, der die empfangenen Daten auswertet, sortiert, aufbereitet und dem Wartungstechniker in der gewünschten Form anzeigt.

Anders als in Fig. 1 dargestellt, kann der Unterbrechungsschalter 19 auch z.B. als Teil des Netzgerätes 6 ausgebildet sein, z.B. in Form geeigneter Steuerung eines elektronischen Schaltnetzteiles. Das Netzgerät 6 kann von der Elektronikeinrichtung 10 steuerbar sein. Dann reicht ein einfaches Softwareupdate an der Elektronikeinrichtung 10, um die gewünschte Unterbrechungsfunktion auch bei älteren Steuervorrichtungen nachrüsten zu können.

Der Rohrmotor 11 kann, anders als dargestellt, auch als Gleichstrommotor ausgebildet sein, der dann von den gleichspannungsführenden Leitungen 7 und 8 versorgt werden kann. Dazu muss das Netzgerät 6 stärker dimensioniert sein. In diesem Fall bietet sich die Möglichkeit, den Rohrmotor auch im Ausgabemodus, also bei Versorgung durch die Gleichspannungsquelle 18, weiterlaufen zu lassen, falls dies für Sonderfälle erforderlich ist.

Im dargestellten Ausführungsbeispiel ist die Zuleitung mit zwei Leitungen 2, 3 ausgebildet, an die die äußere Versorgungsquelle 5 bzw. 18, anschließbar ist. Steuerungsmöglichkeiten von aussen, andere als die erfindungsgemässe Einschaltung des Ausgabemodus, sind nicht vorgesehen. Bei dieser sehr einfachen Steuervorrichtung 1 ist nur ein einfaches Ein- und Ausschalten des Rohrmotors 11 durch Ein- und Ausschalten des Versorgungsstromes über einen äusseren Schalter in der Zuleitung 2, 3 möglich. Wenn drei Zuleitungen vorhanden sein, kann über diese die Wechselspannungsquelle 5 auf zwei Arten anschließbar sein, um auf schaltungstechnisch sehr einfache Weise den Motor 11 je nach gewünschter Betätigungsrichtung in der einen oder anderen Laufrichtung zu betreiben.

## Patentansprüche

1. Steuervorrichtung zur Steuerung eines von einer Versorgungsquelle (5, 18) über eine Zuleitung (2, 3) mit Strom versorgten Rohrmotors (11), **dadurch gekennzeichnet, dass** zum Senden von Daten auf der Zuleitung eine den versorgenden Strom in Form von die Daten wiedergebenden Impulsen unterbrechende Stromunterbrechungseinrichtung (19) und zum Empfang der Daten eine den versorgenden Strom messende Strommesseinrichtung (20) vorgesehen sind.

2. Steuervorrichtung nach Anspruch 1, **dadurch gekennzeichnet, dass** die Stromunterbrechungseinrichtung (19) an der Steuervorrichtung (1) angeordnet ist, von der sie dort ermittelte Zustandsdaten erhält und dass die Strommesseinrichtung (20) an der Versorgungsquelle (5) angeordnet ist.

3. Steuervorrichtung nach Anspruch 1, **dadurch gekennzeichnet, dass** die Stromunterbrechungseinrichtung (19) an der Versorgungsquelle (5) angeordnet ist und dass die Strommesseinrichtung (20) an der Steuervorrichtung (1) angeordnet ist, der sie empfangene Daten überträgt.

4. Steuervorrichtung nach Anspruch 2, **dadurch gekennzeichnet, dass** die Steuervorrichtung (1) derart ausgebildet ist, dass sie zur Datenausgabe in einen Ausgabemodus bringbar ist.

5. Steuervorrichtung nach Anspruch 4, **dadurch gekennzeichnet, dass** die Steuervorrichtung (1) die an der Zuleitung (2, 3) anliegende Spannung mit Überwachungsmitteln (17) überwachend und den Ausgabemodus in Abhängigkeit von der Spannung aktivierend ausgebildet ist.

6. Steuervorrichtung nach Anspruch 5, **dadurch gekennzeichnet, dass** der Rohrmotor (11) mit Wechselspannung betreibbar ist und die aktivierende Spannung Gleichspannung (18) ist.

7. Steuervorrichtung nach Anspruch 6, **dadurch gekennzeichnet, dass** die Zuleitung (2, 3) eine Trennstelle (4) aufweist, an die eine transportable, Gleichspannung liefernde Versorgungsquelle (18) anschließbar ist.

8. Rohrmotor mit einer Steuervorrichtung (1) nach einem der vorhergehenden Ansprüche.

9. Verfahren zum Auslesen von Daten aus einer Steuervorrichtung (1) nach einem der Ansprüche 1 bis 7, **dadurch gekennzeichnet, dass** der Strom auf der Zuleitung (2, 3) gemessen, auftretende Unterbrechungen ermittelt und sich daraus ergebende Daten bestimmt werden.

10. Verfahren nach Anspruch 9 zum Auslesen von Daten aus einer Steuervorrichtung (1) nach Anspruch 7, **dadurch gekennzeichnet, dass** die Zuleitung (2, 3) an der Trennstelle (4) getrennt und an die Gleichspannung liefernde Versorgungsquelle (18) angeschlossen wird, und dass dann von der Datenauswerteinrichtung (22) die übertragenen Daten ausgelesen werden.
